# EUROPEAN PATENT SPECIFICATION

(11) **EP 0 742 471 B1**
(45) Date of publication and mention of the grant of the patent: **20.08.2008**
(21) Application number: 96107413.5
(22) Date of filing: 09.05.1996
(51) Int. Cl.: G02F 1/1337

(54) **Arrangement for rubbingless orientation of liquid crystals with tilt**
Anordnung zur gekippten Ausrichtung von Flüssigkristallen ohne Reiben
Agencement d'orientation des cristaux liquides sans frottage

(30) Priority: 10.05.1995 JP 11185195
(43) Date of publication of application: 13.11.1996
(73) Proprietor: Stanley Electric Co., Ltd., Yokohama-shi, Kanagawa (JP); Kobayashi, Shunsuke, Tokyo (JP); Iimura, Yasufumi, Fuchu-shi, Tokyo (JP); Sharp Kabushiki Kaisha, Osaka-shi Osaka (JP)
(72) Inventor: Hashimoto, Toru, Aoba-ku, Yokohama-shi, Kanagawa (JP); Sugiyama, Takashi, Aoba-ku, Yokohama-shi, Kanagawa (JP); Kobayashi, Shunsuke, Aoba-ku, Yokohama-shi, Kanagawa (JP); Iimura, Yasufumi, Fuchu-shi, Tokyo (JP)
(74) Representative: Geyer, Ulrich F.

(56) References cited:
- EP-A- 0 525 478
- SCHADT M ET AL: "SURFACE-INDUCED PARALLEL ALIGNMENT OF LIQUID CRYSTALS BY LINEARLY POLYMERIZED PHOTOPOLYMERS" JAPANESE JOURNAL OF APPLIED PHYSICS, vol. 31, no. 7 PART 01, 1 July 1992, pages 2155-2164, XP000371722
- GIBBONS W M ET AL: "OPTICALLY CONTROLLED ALIGNMENT OF LIQUID CRYSTALS" MATERIALS RESEARCH SOCIETY SYMPOSIUM PROCEEDINGS, 5 April 1994, pages 211-216, XP000562383
- PATENT ABSTRACTS OF JAPAN vol. 012, no. 383 (P-770), 13 October 1988 & JP 63 129323 A (ASAHI GLASS CO LTD), 1 June 1988,
- HASHIMOTO T ET AL: "TN-LCD WITH QUARTERED SUBPIXELS USING POLARIZED UV-LIGHT-IRRADIATED POLYMER ORIENTATION FILMS" 1995 SID INTERNATIONAL SYMPOSIUM DIGEST OF TECHNICAL PAPERS, ORLANDO, MAY 23 - 25, 1995, May 1995, SOCIETY FOR INFORMATION DISPLAY, pages 877-880, XP000610991

## Description

### BACKGROUND OF THE INVENTION

### a) Field of the Invention

The present invention relates to a liquid crystal orientation structure with pre-tilt formed without a rubbing process.

### b) Description of the Related Art

In liquid crystal display devices, the orientation of liquid crystal molecules is changed to another orientation upon application of an external electric field. This change in the optical characteristics of liquid crystal is used for visualizing a display pattern. The surfaces of glass substrates (surfaces of orientation films covering the electrodes on the glass substrates) holding liquid crystal therebetween are generally subjected to an orientation process to impart a particular orientation to liquid crystal molecules.

For a conventional twisted nematic (TN) type liquid crystal cell, rubbing is used as an orientation process in which glass substrates holding the liquid crystal therebetween are rubbed with cotton cloth in one direction.

In order to twist liquid crystal molecules, rubbing directions of the upper and lower substrates are perpendicular to each other. For a negative liquid crystal cell, the polarization axis of the parallel polarizer plates placed on opposite sides of the liquid crystal cell is made in parallel to one of the two rubbing directions. For a positive liquid crystal cell, the polarization axes of the polarizer plates of crossed-Nicol arrangement are made parallel to the corresponding rubbing directions of the adjacent substrates.

Static electricity may be generated during rubbing. This static electricity may cause dielectric breakdown of the orientation films, defective orientation, or damages on the electrodes under the orientation films, resulting in a low performance of liquid crystal displays.

A large number of fine dusts may be generated during rubbing. Fine dusts attached to the substrates by static electricity may cause gap deficiency or display defects such as black and white spots.

In order to solve these problems, instead of a rubbing process, other orientation processes such as an orientation process using light polarization memory films have been developed.

In the orientation process using light polarization memory films, after a light polarization memory film is formed on the surface of a substrate, polarized light is applied to the film to form a desired liquid crystal orientation. The light polarization memory film exposed to polarized light can impart the orientation corresponding to the polarization of applied light to liquid crystal molecules.

The orientation process using light polarization memory films can eliminate various problems caused by rubbing and give an orientation of liquid crystal molecules having an in-plane direction parallel to the plane of the substrate.

However, this orientation given by the process using light polarization memory films is mainly in the in-plane direction parallel to the substrate, and the pre-tilt orientation cannot be given. Pre-tilt of nematic liquid crystal means a state in which each liquid crystal molecule has one end in the longitudinal axis direction being lifted up by a certain angle relative to the substrate plane, when voltage is not applied across the liquid crystal cell. In the case of homeotropic liquid crystal, pre-tilt means a state in which each liquid crystal molecule has its longitudinal axis being inclined from the normal direction of the substrate.

A nematic liquid crystal molecule rises from the lifted end side when a voltage is applied to the cell. Therefore, the pre-tilt defines the rise direction of each molecule. A liquid crystal molecule without pre-tilt cannot determine the rise direction, and the inclination of the molecule may be reversed depending upon an applied voltage or the position of the molecule (reverse-tilt). A boundary between liquid crystal molecule groups having opposite rise directions may appear as a line defect on a display screen.

A number of such defects are generated particularly at an applied voltage near the threshold voltage. The positions of these defects move at random as time lapses or the applied voltage changes, and so these defects become visually conspicuous. Light scatter and low contrast are also present at the same time, considerably lowering the display quality of liquid crystal displays.

EP-A-0 525 478 relates to a liquid crystal display cell and was used as a basis for the preamble of claim 1. According to this prior art, in liquid crystal display cells made from a liquid crystal which is arranged between two substrate plates provided with control electrodes, the orientation layer on the insides, provided with the electrodes, of the plates consists of an oriented photopolymer layer. This layer is formed by irradiating the photopolarisable material with linearally polarised light.

### SUMMARY OF THE INVENTION

It is an object of the present invention to provide a method of manufacturing a liquid crystal orientation structure with pre-tilt, without using a rubbing process which may cause defective products such as display deficiency and element breakdown.

It is another object of the present invention to provide a liquid crystal display having a high display quality to be manufactured by the method described above.

According to one aspect of the present invention, there is provided a method of manufacturing a liquid crystal orientation structure as set forth in claim 1. Preferred embodiments of the invention may be gathered from the dependent claims.

The photosensitive high polymer film which absorbed the first and second polarized light can impart an orientation with pre-tilt to liquid crystal molecules. The second polarized light has polarized components perpendicular to the polarization direction of the first polarized light and has the optical axis inclined oblique relative to the surface of the substrate.

The azimuth angle (in-plane angle) of an orientation of a liquid crystal molecule and the polar angle (angle between the substrate normal and the longitudinal axis of a liquid crystal molecule) depend on the polarization directions of the first and second polarized lights.

As above, pre-tilt can be imparted to liquid crystal molecules without rubbing. It is therefore possible to suppress the generation of device breakdown to be caused by rubbing and to give a rise direction of liquid crystal molecules. A uniform liquid crystal display screen can be obtained.

### BRIEF DESCRIPTION OF THE DRAWINGS

Figs.1A to 1C are schematic perspective views showing light exposure conditions according to a first embodiment.
Figs.2A to 2C are cross sectional views of a substrate illustrating the processes of manufacturing a liquid crystal display.
Figs.3A and 3B are diagrams showing the molecule structure and refractive index ellipsoid of PVC used by embodiments.
Figs.4A to 4D are schematic diagrams showing refractive index ellipsoid models formed in a PVC film upon light exposure.
Figs.5A and 5B are schematic perspective views illustrating light exposure conditions according to a third embodiment of the invention.
Figs.6A and 6B are schematic perspective views illustrating light exposure conditions according to a fourth embodiment of the invention.
Figs.7A and 7B are schematic perspective views illustrating light exposure conditions according to a fifth embodiment of the invention.
Figs.8A and 8B are schematic perspective views illustrating light exposure conditions according to a sixth embodiment of the invention.
Figs.9A to 9D are schematic perspective views illustrating light exposure conditions according to a seventh embodiment of the invention.
Fig.10 is a schematic perspective view showing an example of multi domains formed on a substrate.
Fig.11 is a schematic perspective view illustrating concurrent exposure of first and second exposure lights according to another embodiment.
Figs.12A to 12D are schematic diagrams showing index ellipsoid models formed in a PVC film upon light exposure.

### DETAILED DESCRIPTION OF THE PREFERRED EMBODIMENTS

The principal processes of manufacturing a liquid crystal display include: 1) a process of forming electrodes and other necessary elements on a pair of substrates constituting a liquid crystal cell; 2) a process of forming an orientation structure on the substrate, 3) a process of forming the liquid crystal cell, 4) a process of injecting liquid crystal material in the liquid crystal cell, and 5) a process of sealing the liquid crystal cell.

In the following embodiments, the process 2) of forming an orientation structure on a substrate will be described, particularly, the method of forming a liquid crystal orientation structure with pre-tile by using a photosensitive high polymer film will be described.

A photosensitive high polymer film is made of macromolecule which changes the structure upon light exposure, and includes a so-called light polarization memory film. A photosensitive high polymer film used in the embodiments is a film of the type that orientates liquid crystal molecules in the direction perpendicular to the polarization direction of applied light. For example, PVC (polyvinyl cinnamate) is used in the embodiments.

### (1st Embodiment)

PVC is dissolved by 2 wt % in mixed solvent of monochlorobenzene and dichloromethane. This PVC solution is coated by a spinner on the surface of a substrate constituting a liquid crystal cell and already formed with electrodes and other necessary elements. Thereafter, the substrate is dried for one hour at 100°C. In this manner, a PVC film of about 100 nm can be formed.

Next, light is exposed twice to the PVC film formed on the substrate surface (first and second exposures). Both the first exposure light and second exposure light contain light having a wavelength which can be absorbed by the PVC film. For example, light from a high pressure mercury lamp having wavelengths of 254 nm, 303 nm, and 313 nm is used as the exposure light.

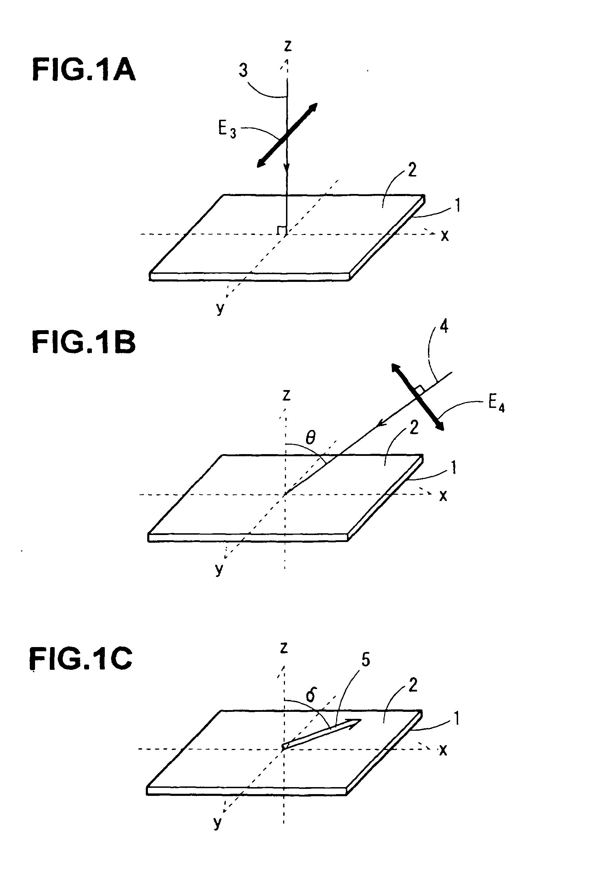

The positional relationship among the first exposure light, second exposure light, and substrate will be described with reference to the x-y-z coordinate system shown in Fig.1A. A position on the substrate where both the first exposure light and second exposure light are incident is taken as the origin, the substrate plane is the x-y plane, and the normal direction of the substrate is the z-axis.

Although only one exposure light beam is shown in Figs.1A and 1B, both the first exposure light and second exposure light are applied to the whole surface of the PVC film on the substrate. The positional relationship between the first exposure light and second exposure light on the substrate surface is as follows.

As shown in Fig.1A, the first exposure light 3 is linearly polarized light having the polarization direction E3 in the y-axis direction. This first exposure light 3 is applied to the PVC film 2 on the substrate 1 along the normal direction, i.e., along the z-axis direction. The exposure time is 50 seconds. The exposure energy is 1.5 J/cm².

Next, as shown in Fig.1B, the second exposure light 4 is applied to the PVC film 2 at an incident angle θ = 45 degrees relative to the plane of the PVC film 2. The incident angle is an angle between the optical axis (the direction of the incident light) and the substrate normal. The second exposure light 4 has the polarization direction E4 in the x-z plane perpendicular to the polarization direction of the first exposure light. The incident plane of the second exposure light 4 is the x-z plane perpendicular to the polarization direction of the first exposure light. The exposure time is 5 seconds.

### (2nd Embodiment)

A PVC film is formed on the surface of a substrate in the manner similar to the first embodiment. Next, light is exposed to the surface of the PVC film. Similar to the first embodiment, both the first exposure light and second exposure light are linearly polarized light having a wavelength of 240 to 320 nm. The order of applying the first exposure light and second exposure light is reversed, as different from the first embodiment.

First, as shown in Fig.1B, exposure light 4 having the incident plane and polarization direction E4 in the same x-z plane is applied to the PVC film 2 at an incident angle θ = 45 degrees. The exposure time is 5 seconds.

Next, as shown in Fig.1A, polarized light 3 having the polarization direction E3 in the y-axis direction is applied to the PVC film 2 along the substrate normal direction for 50 seconds.

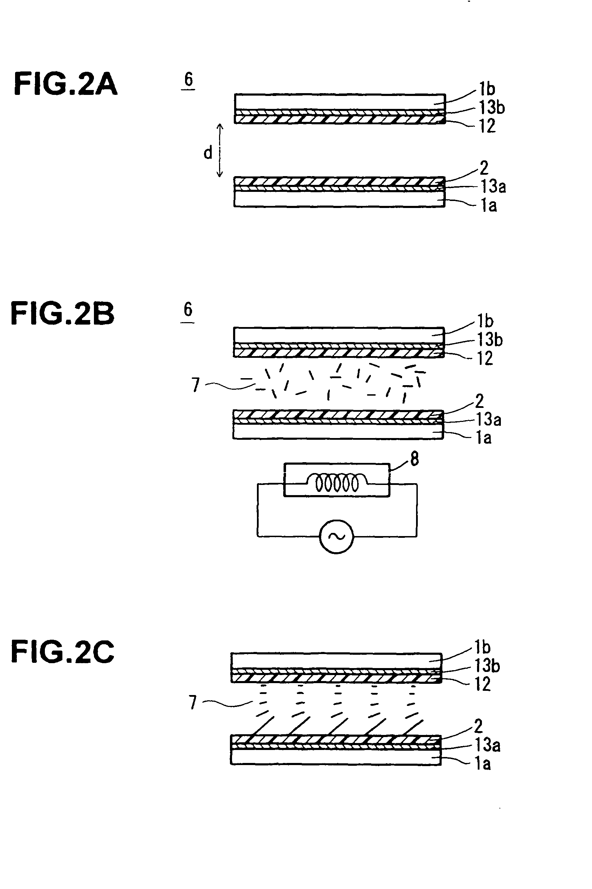

Liquid crystal displays were manufactured by the method illustrated in Figs.2A to 2C by using liquid crystal substrates subjected to the orientation processes of the first and second embodiments.

First, as shown in Fig.2A, substrates 1a and 1b were disposed facing each other. The substrate 1a has a transparent electrode layer 13a formed on the substrate surface and a photosensitive high polymer film 2 formed on the electrode layer 13a and subjected to the orientation process. The substrate 1b has a transparent electrode layer 13b formed on the substrate surface and a photosensitive high polymer film 12 formed on the electrode layer 13b and not subjected to the orientation process. The two substrates were assembled with a predetermined gap d therebetween to form an empty cell 6.

Next, as shown in Fig.2B, the cell 6 was heated with a heater 8 and chiral nematic liquid crystal molecules 7 were injected into the cell 6 while maintaining a temperature of an N-I (N: nematic, I:isotropic) phase transition point or higher to keep the liquid crystal in the isotropic phase.

The value d/p was selected so as to be in the range from about 0 to about 0.75, where d is the gap of the liquid crystal cell and p is a chiral pitch of the liquid crystal. Thereafter, the temperature of liquid crystal molecules was gradually lowered to the N-I phase transition point or lower.

Liquid crystal molecules may be injected at a room temperature in the nematic phase. In this case, after the cell is sealed, the liquid crystal cell is heated to change the phase of the liquid crystal molecules to the isotropic phase, and thereafter gradually cooled to the room temperature.

Orientation with uniform pre-tilt over the whole area of the liquid crystal cell 6 can be given to the liquid crystal molecules, as shown in Fig.2C which assumes the value d/p is 0.25, i.e., the twist angle is 90 degrees.

Fig.1C illustrates an orientation direction 5 in the x-y-z coordinate system, given to the molecules in the liquid crystal cell manufactured in the above manner. The azimuth angle (in-plane direction) of the orientation direction 5 given to the liquid crystal molecules was generally perpendicular to the polarization direction E3 of the polarized light (first exposure light 3 of the first embodiment) applied along the normal direction. The polar angle 6 of pre-tilt given to the liquid crystal molecules was generally dependent upon the incident angle *θ* of the exposure light obliquely applied to the substrate (second exposure light 4 in case of the first embodiment). As the incident angle of the exposure light was made large, the pre-tilt polar angle of liquid crystal molecules became large.

Both the orientation processes of the first and second embodiments showed almost the same orientation state of liquid crystal molecules. Namely, the orientation state of liquid crystal molecules is hardly affected by the order of first exposure light and second exposure light applied to the PVC film.

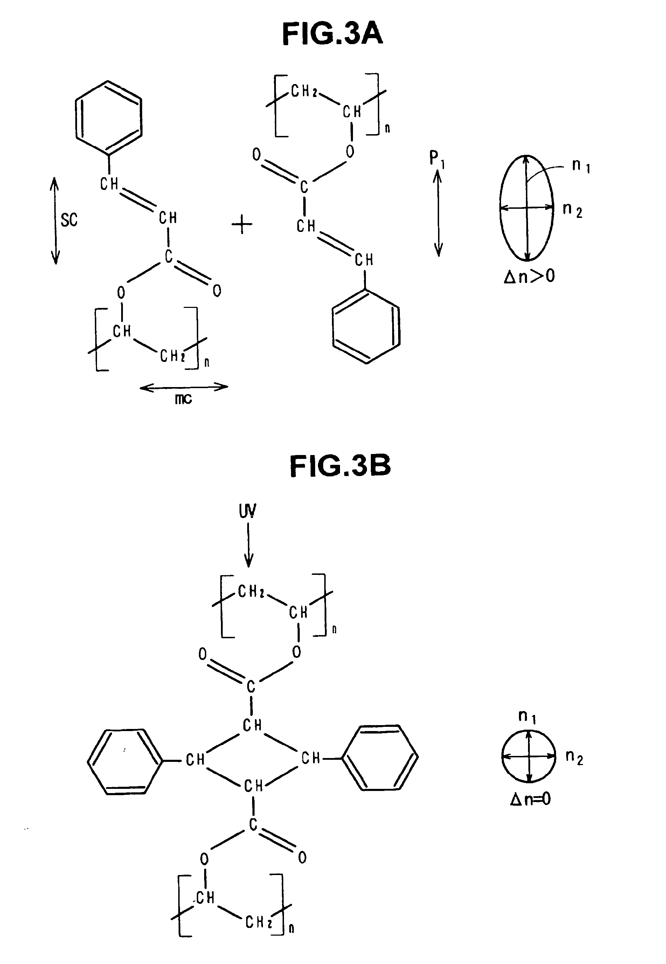

Figs.3A and 3B illustrate a change in the molecular structure of the PVC films applied with exposure light of the first and second embodiments. Fig.3A shows the structure of PVC molecules before light exposure. In the main chain direction mc, n molecules are coupled. Each molecule has a side chain as shown.

A cross section of a refractive index ellipsoid for one side chain as taken along a plane containing the main optical axis is shown on the right side of Fig.3A. The longer diameter n₁ of the refractive index ellipsoid corresponds to a refractive index relative to light components of the light propagating in the directions perpendicular to the side chain direction sc, and having the polarization plane parallel to the side chain direction sc. The shorter diameter n₂ corresponds to a refractive index relative to light components propagating in the same directions and having the polarization plane perpendicular to the side chain direction sc. The refractive index relative to light having a polarization plane parallel to the main optical axis is larger than the refractive index relative to lights having polarization planes perpendicular to the main optical axis. Therefore, molecules in the PVC film show optically positive birefringence (Δn > 0).

As ultra violet rays UV having a polarization direction P₁ in the side chain direction sc are applied to a PVC film, molecules at side chains along the polarization direction are optically crosslinked and the side chains are lost, as shown in Fig.3B. Therefore, anisotropy of the refractive indexes caused by the side chains along the polarization direction is lost. Namely, as shown in the right side of Fig.3B, it is considered that anisotropy of the refractive indice along the polarization direction P₁ of the applied ultra violet rays UV is lost.

In the PVC film immediately after it is formed on the substrate, side chains are distributed in random directions at an equal probability. It is therefore considered that the PVC film as a whole does not show anisotropy. As polarized ultra violet rays are applied to the PVC film, crosslinking of side chains progresses along the polarization direction so that anisotropy of refractive indexes which was present before the side chains are lost, disappears by a state change from Figs.3A to Fig.3B. As the result, anisotropy of refractive indexes by side chains in the in-plane direction perpendicular to the polarization direction of the ultra violet rays remains. As a whole, this remained anisotropy of refractive indexes may result in a larger refractive index in the in-plane directions perpendicular to the polarization direction of ultra violet rays UV than that in the polarization direction. This plane with a higher refractive index intersects with the substrate surface along a straight line whose direction corresponds to the x-axis direction shown in Fig.1A.

If a PVC film with remained anisotropy of refractive indexes is used as an orientation film of liquid crystal molecules, feasibility of orientating the molecules in one direction may be attributed to this anisotropy. It has been found from experiments that liquid crystal molecules are orientated in the direction perpendicular to the polarization of exposure light.

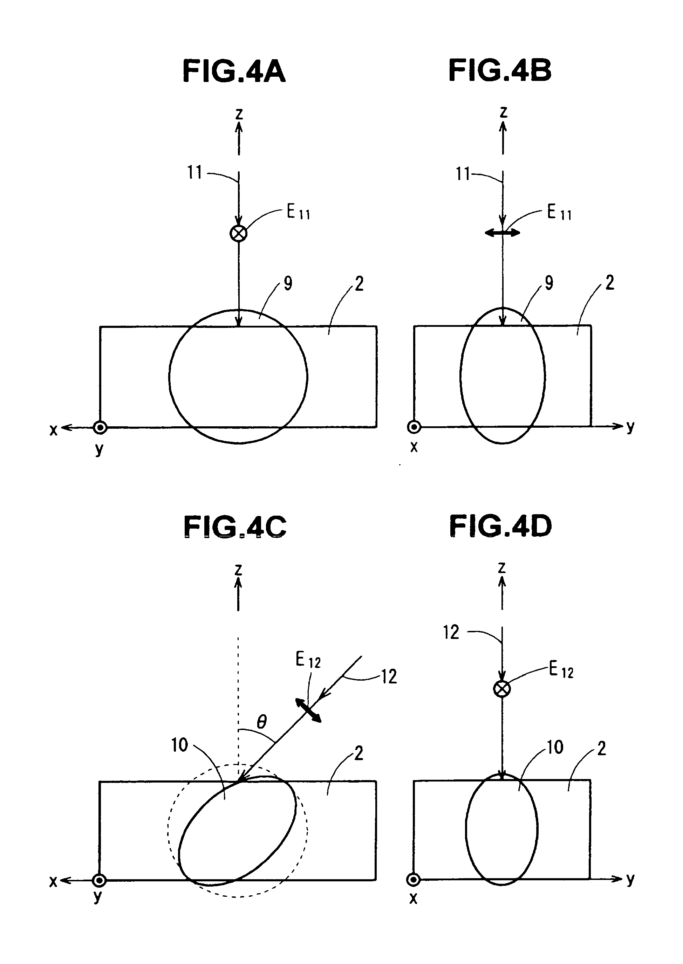

Figs.4A to 4D are schematic diagram illustrating refractive index anisotropy (Δn) given to the PVC orientation film applied with polarized light. In these drawings, a thickness of the PVC film is shown large relative to the width for schematically illustrating the creation of anisotropy in the refractive index.

As first polarized light 11 having a polarization direction E₁₁ in the y-axis direction is applied to a PVC film along the normal direction (z-axis direction), refractive index anisotropy caused by side chains parallel to the polarization direction among those molecular side chains in random directions extinguishes. This may result in the formation of an index ellipsoid 9 generally circular as viewed from the + y-axis direction and ellipsoidal as viewed from the + x-axis direction, as shown in Figs.4A and 4B. It is therefore expected that an index ellipsoid 9 having a negative birefringence and a main optical axis in the y-axis direction is obtained, which ellipsoid is analogous to a circular disk shape.

The refractive index ellipsoid is defined by a curved surface in which the polarization direction of light is given in the three-dimensional space and the refractive indexes are represented by the lengths of vector quantities.

The refractive index ellipsoid 9 has directivity that it is long in the x-axis direction and short in the y-axis direction as viewed on the substrate plane. However, it has no directivity in the x-z plane which is parallel to the orientation direction of liquid crystal molecules. From this reason, it is therefore considered that pre-tilt cannot be given to liquid crystal molecules.

As shown in Figs.4C and 4D, as second polarized light 12 having the polarization direction E₁₂ in the x-z plane perpendicular to the polarization direction E₁₁ of the polarized light 11 is obliquely applied to the PVC film at an incident angle θ, refractive index anisotropy caused by side chains along the polarization direction of the applied light is lost. As a result, side chains along the direction of the incident polarized light 12 remain providing the refractive index anisotropy represented by the index ellipsoid longer in the direction of the incident polarized light 12.

It is expected that liquid crystal molecules are orientated along the index ellipsoid 10 of a rugby ball shape inclined relative to the substrate surface. The direction of the longer axis of this index ellipsoid 10 may be attributed to the generation of pre-tilt of liquid crystal molecules. As the incident angle of the polarized light 12 changes, the angle between the longer axis of the refractive index ellipsoid 10 and the x-z plane changes correspondingly. It is therefore possible to adjust the pre-tilt angle by controlling the incident angle of the exposure light.

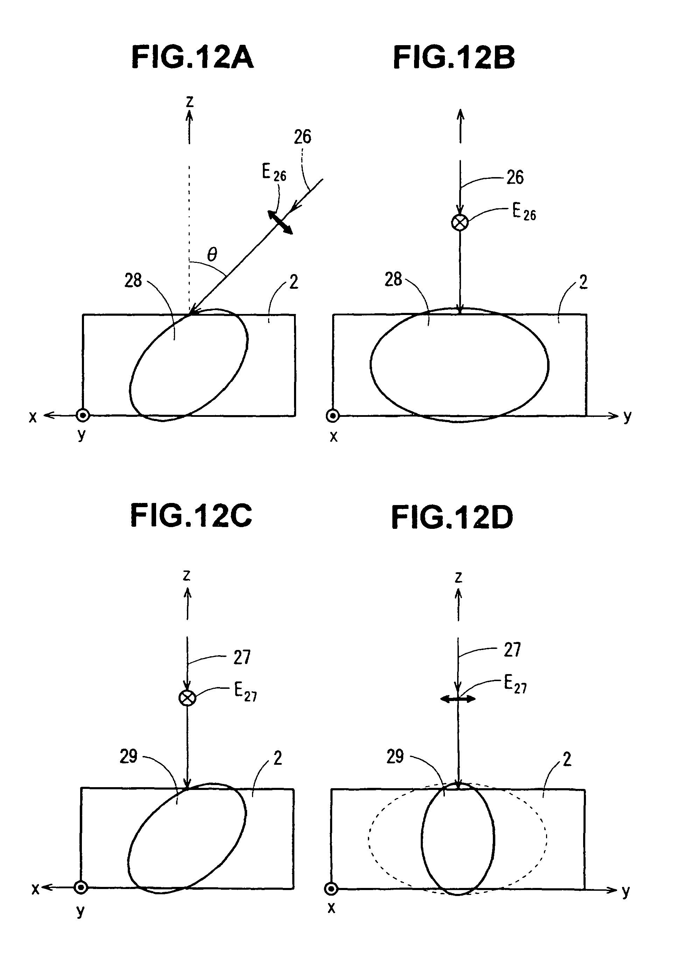

Figs.12A to 12D show refractive index ellipsoid models formed in a PVC film when first exposure light is applied obliquely relative to the substrate surface and second exposure light is applied along the substrate normal direction as in the second embodiment.

As shown in Figs.12A and 12B, as polarized light 26 having the polarization direction E₂₆ and incident plane in the same x-z plane is obliquely applied to a PVC film, it is expected that refractive index anisotropy caused by side chains of PVC molecules along the polarization direction of incident light is lost and a refractive index ellipsoid 28 of an obliquely slanted disk shape is formed. This refractive index ellipsoid 28 is expected to be an ellipsoid obliquely slanted as viewed from the + y-axis direction and having its longer axis in the y-axis direction as viewed from the + x-axis direction, as shown in Figs.12A and 12B. The refractive index ellipsoid 28 has the directivity that it is short in the x-axis direction and long in the y-axis direction as viewed on the substrate surface (x-y plane). This directivity may make the orientation of liquid crystal molecules to be in the y-axis direction. In this case, the refractive index ellipsoid slanted as viewed along the y-axis direction does not contribute at all to the orientation of liquid crystal molecules. It can be considered therefore that pre-tilt cannot be given to liquid crystal molecules.

As shown in Figs.12C and 12D, as second exposure light 27 having the polarization direction E₂₇ in the y-axis direction is applied to the PVC film along the normal direction (z-axis direction), refractive index anisotropy caused by side chains of molecules along the polarization direction is lost. As shown in Figs.12C and 12D, it can be therefore expected that an index ellipsoid 29 of an obliquely slanted rugby ball shape similar to that shown in Figs.4C and 4D is obtained.

As described so far, as the first polarized light is absorbed in the PVC film, refractive index anisotropy caused by side chains along the polarization direction among those side chains disposed at random extinguishes. This may be attributed to the formation of an uniaxial and negative refractive index anisotropy in the PVC film. This refractive index anisotropy can be represented by an index ellipsoid of a flattened sphere. Thereafter, the second polarized light having the polarization direction perpendicular to the polarization direction of the first polarized light is absorbed in the PVC film. This may be attributed to changing the refractive index ellipsoid of the flattened sphere to an index ellipsoid long in one direction and generally axial.

In order to eventually obtain the refractive index anisotropy represented by an axial index ellipsoid, it is necessary to perform at least two processes of absorbing polarized light. In order to form a polar angle of pre-tilt, at least one polarized light to be absorbed is required to be applied obliquely relative to the substrate surface.

From the above considerations, the first polarized light is not necessarily required to be applied along the substrate normal direction. As will be described with the following third embodiment, both the first exposure light and second exposure light may be applied obliquely relative to the substrate surface.

### (3rd Embodiment)

A PVC film is formed on the surface of a substrate in the manner similar to the first embodiment.

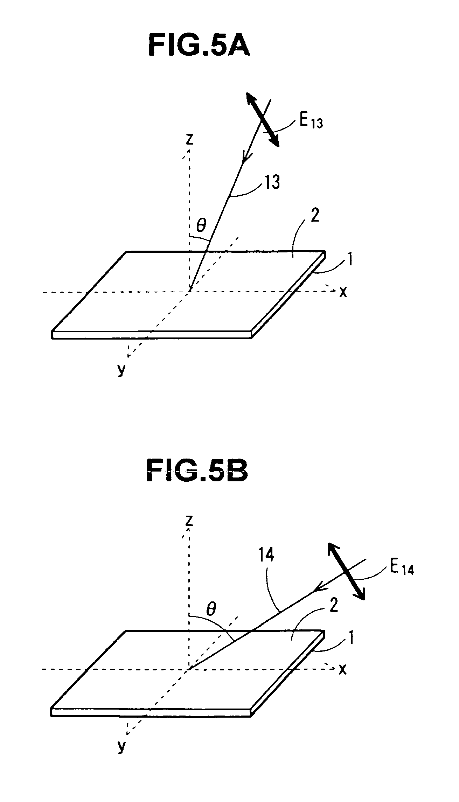

Figs.5A and 5B illustrate a light exposure method according to the third embodiment. Both the exposures are performed by using linearly polarized light having a wavelength of 240 to 320 nm. As shown in Fig.5A, first exposure light 13 has the incident plane and polarization direction E₁₃ in the same y-z plane. The first exposure light is applied to the PVC film at the incident angle θ = 45 degrees. The exposure time is 50 seconds.

As shown in Fig.5B, second exposure light 14 has the incident plane and polarization direction E₁₄ in the x-z plane. The second exposure light 14 is applied to the PVC film at the incident angle θ = 45 degrees. The exposure time is 5 seconds.

In the first to third embodiments, both the first exposure light and second exposure light are polarized light. Exposure light is not always limited to polarized light, but natural light not polarized may be applied obliquely with similar expected effects as above.

Natural light not polarized and applied obliquely to a substance has a relatively high reflectivity. The reflectivity changes depending upon the polarized components. Generally, the p-polarized components along a direction in the incident plane have a lower reflectivity than the s-polarized components along a direction perpendicular to the incident plane. This means that the p-polarized components are more selectively introduced in the substance. Therefore, even if natural light not polarized is applied obliquely to the PVC film, polarized light is absorbed in the film and similar effects as the polarized light exposure can be obtained.

For example, as natural light having the incident plane in the y-z plane is applied obliquely to the PVC film, polarized light having the polarization direction in the y-z plane is mainly absorbed in the PVC film.

In the following, the fourth to sixth embodiments will be described in which natural light having a wavelength of 240 to 320 nm is used as one or both of the first exposure light and second exposure light. The method of forming a PVC orientation film is similar to the method of the first embodiment. In the following, a method of applying light to the PVC film will be described.

### (4th Embodiment)

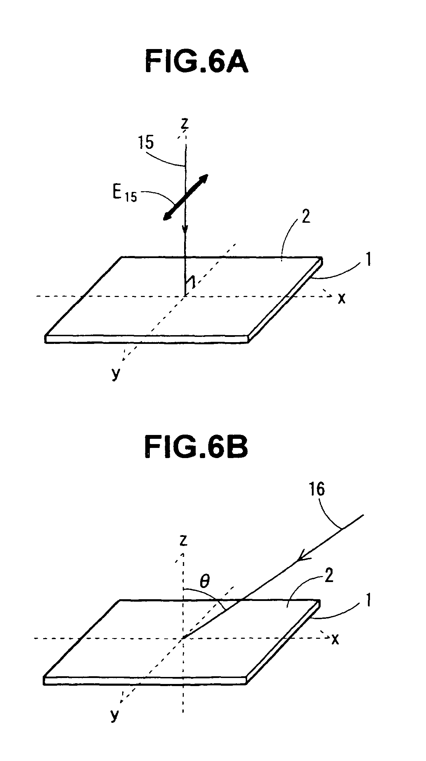

A light exposure method of the fourth embodiment is illustrated in Figs.6A and 6B.

First exposure light 15 is applied as illustrated in Fig.6A under the same conditions of the first exposure of the first embodiment. The first exposure light 15 having the polarization direction E₁₅ in the y-axis direction is applied to the PVC film on the substrate 1 along the substrate normal direction for 50 seconds.

Second exposure light 16 is natural light not polarized. As shown in Fig.6B, the second exposure light 16 having the incident plane in the x-z plane is applied to the PVC film 2 at the incident angle θ = 45 degrees. The exposure time is 5 seconds or shorter.

Of the second exposure light 16, the light having the polarization direction in the x-z plane is mainly absorbed in the PVC film 2.

### (5th Embodiment)

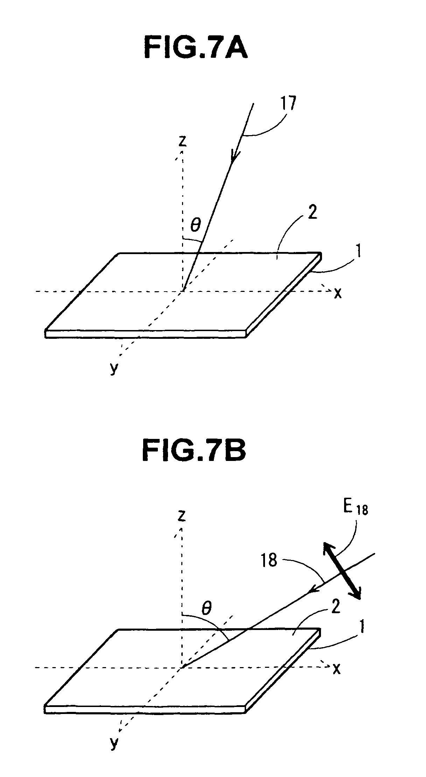

A light exposure method of the fifth embodiment is illustrated in Figs.7A and 7B.

First exposure light 17 is natural light not polarized. As shown in Fig.7A, the first exposure light 17 has the incident plane in the y-z plane. The first exposure light 17 is obliquely applied to the PVC film 12 at he incident angle θ = 45 degrees. The exposure time is 50 seconds or shorter.

Of the first exposure light 17, the light having the polarization direction in the y-z plane is mainly absorbed in the PVC film 2.

As shown in Fig.7B, second exposure light is polarized light having the incident plane and polarization direction E₁₈ in the same x-z plane. The second exposure light is obliquely applied to the PVC film at the incident angle θ = 45 degrees. The exposure time is 5 seconds.

### (6th Embodiment)

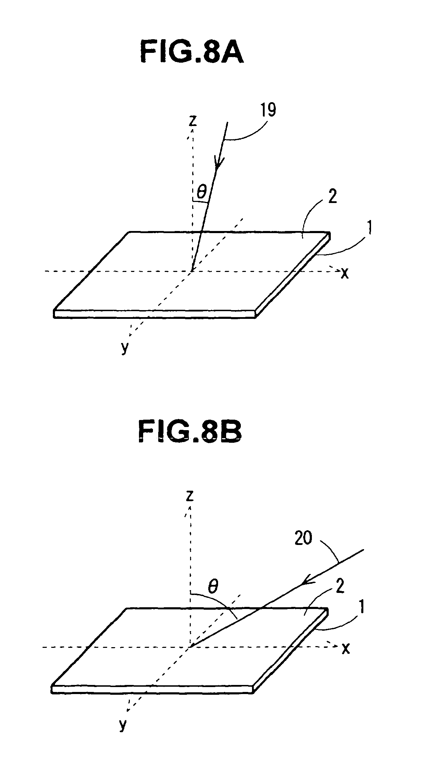

A light exposure method of the sixth embodiment is illustrated in Figs.8A and 8B.

Both first exposure light and second exposure light are natural light not polarized. As shown in Fig.8A, first exposure light 19 has the incident plane in the y-z plane. The first exposure light 19 is applied to the PVC film 2 at the incident angle θ = 45 degrees. The exposure time is 50 seconds or shorter.

Of the first exposure light 19, the light having the polarization direction in the y-z plane is mainly absorbed in the PVC film 2.

As shown in Fig.8B, second exposure light 20 has the incident plane in the x-z plane. The second exposure light 20 is applied to the PVC film 2 at the incident angle θ = 45 degrees. The exposure time is 5 seconds or shorter.

Of the second exposure light 20, the light having the polarization direction in the x-z plane is mainly absorbed in the PVC film 2.

In the first to sixth embodiments, two processes of light exposure to a photosensitive high polymer film have been described mainly. As earlier described as the results of the first and second embodiments, generally the same orientation structure can be obtained even if the order of the first and second exposure processes is reversed. It is therefore expected that a similar orientation structure of liquid crystal molecules can be obtained even if the first exposure light and second exposure light are applied at the same time.

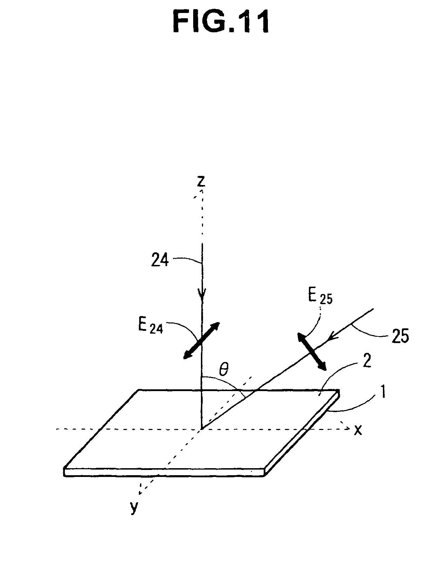

For example, as shown in Fig.11, two processes may be performed at the same time, one process applying polarized light 24 having the polarization direction E₂₄ in the y-axis direction along the substrate normal direction (corresponding to the first light exposure process of the first embodiment), and the other process applying polarized light 25 having the incident plane and polarization direction E₂₅ in the x-z plane obliquely relative to the substrate surface (corresponding to the second light exposure process of the first embodiment). In this case, two types of light applied at the same time are required not to interfere with each other. Similarly, two types of light selected from the combinations of the first exposure light and second exposure light of the third to sixth embodiments may be applied at the same time.

In the first to sixth embodiments, orientation is formed in one direction uniformly over the whole area of the substrate. The substrate may be divided into a plurality of domains, and two or more different orientations may be formed in the respective domains. This embodiment will be described in the following.

### (7th Embodiment)

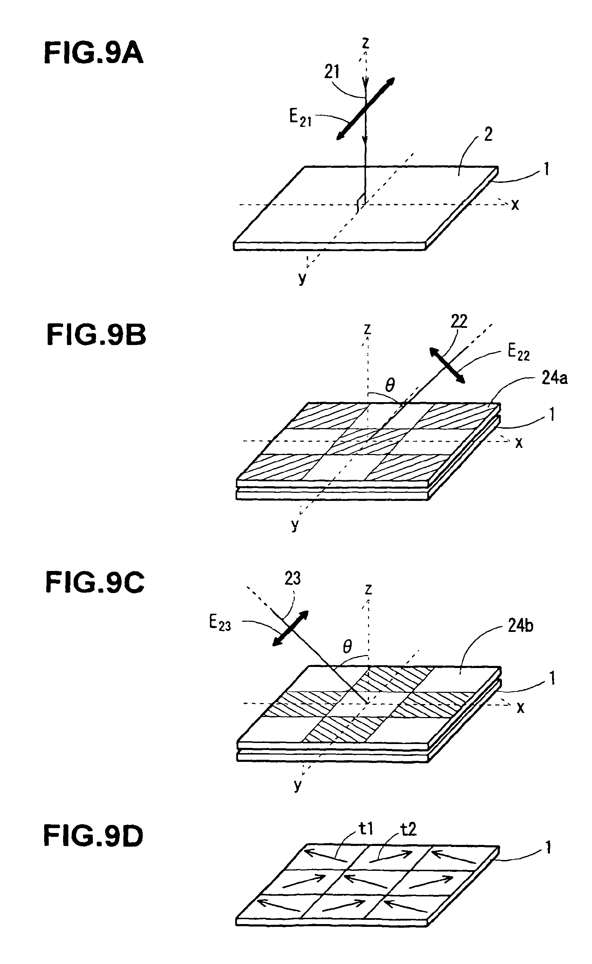

A light exposure method of the seventh embodiment is illustrated in Figs.9A to 9D.

For example, as shown in Fig.9A, first exposure light 21 for a photosensitive high polymer film is polarized light having the polarization direction E₂₁ in the y-axis direction. The first exposure light 21 is applied to the PVC film 2 on the substrate 1 along the substrate normal direction.

Next, as shown in Fig.9B, a mask 24a is placed on the substrate, the mask 24a having transparent areas and opaque areas disposed in a checkerboard pattern of a matrix shape. Second exposure light 22 is applied along an oblique direction down to the mask, e.g., at the incident angle *θ* = 45 degrees, the second exposure light 22 having the polarization direction E₂₂ in the x-z plane perpendicular to the polarization direction of the first exposure light. Light is selectively applied via transparent areas of the mask 24a to the PVC film 2 on the substrate 1.

As shown in Fig.9C, another mask 24b is placed on the substrate, the mask 24b having transparent areas and opaque areas reversed from the mask 24a. Third exposure light 23 having the polarization direction E₂₃ in the x-z plane perpendicular to the polarization direction of the first exposure light is applied at an azimuth angle different by 180 degrees from the second exposure light 22 and at the incident angle θ = 45 degrees relative to the substrate surface.

A liquid crystal cell formed by using the above substrate has an orientation film capable of giving the orientation structure with two types of pre-tilt having opposite rise directions as indicated at t1 and t2 in Fig.9D. In this manner, regions having pre-tilt of different directions can be formed uniformly over the whole substrate. Domains are schematically shown in Figs.9B to 9D. Actual transparent and opaque areas of the mask pattern are preferably formed more finely.

As compared to the liquid crystal display having the orientation structure with pre-tilt having one rise direction, the liquid crystal display having the orientation structure with pre-tilt having two rise directions uniformly distributed over the whole substrate can provide the broader visual angle characteristics. If the number of different rise directions of pre-tilt is increased, the visual angle characteristics can be improved further.

In the seventh embodiment, at the process corresponding to the second light exposure of the first embodiment, light of two directions is selectively applied to the substrate by using masks. Instead, at the process corresponding to the first light exposure, light having different polarization directions may be selectively applied by using masks. Alternatively, masks may be used at both the first and second light exposures to selectively apply light having different polarization directions.

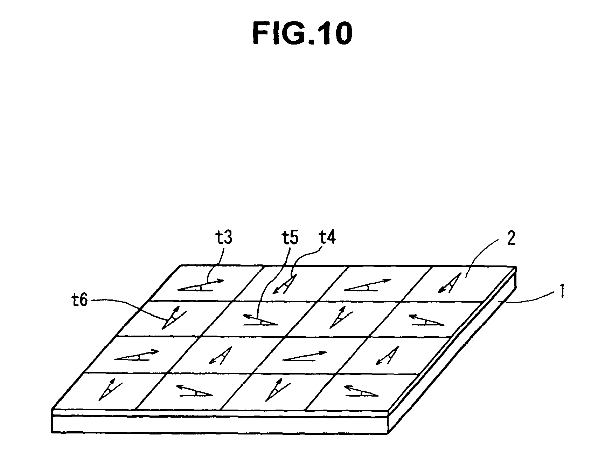

With the latter method, for example, a liquid crystal orientation structure such as shown in Fig.10 can be formed in which the directions of pre-tilt t3 to t6 of liquid crystal molecules are different by 90 degrees in the azimuth angle at adjacent domains.

In the above embodiments, a PVC film is used as the photosensitive high polymer film. The photosensitive high polymer film is not limited only to the PVC film, but other films may also be used if they can give the orientation perpendicular to the polarization direction of exposure light. For example, a polyimide film may be used with similar expected effects.

Polarized light for giving the photosensitive high polymer film with the orientation is not limited to linearly polarized light, but light polarized in certain directions, for example, elliptically polarized light, may also be used. In the embodiments, although exposure light having a wavelength of 240 to 320 nm is used, other exposure light may also be used if the light has the wavelength which the photosensitive high polymer can absorb and which promotes photochemical polymerization.

In all the embodiments, exposure light is obliquely applied at the incident angle *θ* = 45 degrees. The incident angle is not limited to 45 degrees if light applied obliquely relative to the substrate surface can be introduced into the orientation film.

The present invention has been described in connection with the preferred embodiments. The invention is not limited only to the above embodiments. It is apparent to those skilled in the art that various modifications, improvements, combinations and the like can be made without departing from the scope of the appended claims.

## Claims

1. A method of manufacturing a liquid crystal orientation structure comprising the steps of:
preparing a substrate (1a, 1 b) having a photosensitive high polymer film (2, 12) on a surface of the substrate, said photosensitive high polymer film being capable of orientating liquid crystal molecules (7) in a direction perpendicular to a polarization direction of absorbed polarized light;
applying a first light beam (3, 11, 13, 15, 17, 19) in a first direction to said photosensitive high polymer film, said first light beam having a first polarization direction in said photosensitive high polymer film; and
applying a second light beam (4, 12, 14, 16, 18, 20) in a second direction to said photosensitive high polymer film, said second light beam having, in said photosensitive high polymer film, components polarized in a second polarization direction perpendicular to the first polarization direction, **characterized in that** the optical axis of at least one of said first and second light beams is inclined oblique relative to the surface of said photosensitive high polymer film to generate a pre-tilt.

2. A method according to claim 1, wherein said step of applying a first light beam comprises applyingsaid first light beam (3, 11, 15) to said photosensitive high polymer film along the normal direction, and said step of applying a second light beam comprises applying said second light beam (4, 12, 16) to said photosensitive high polymer film along an oblique direction.

3. A method according to claim 1, wherein each of said steps of applying a first and second light beam (13, 14; 19, 20), respectively, comprises applying said light beam to said photosensitive high polymer film along an oblique direction.

4. A method according to claim 2, wherein said step of applying a second light beam (16) is a step of applying natural light to said photosensitive high polymer film along an oblique direction.

5. A method according to claim 1, wherein said step of applying a first light beam comprises applying said first light beam (17) to said photosensitive high polymer film along an oblique direction, said first light beam is a beam of natural light is a beam of natural light and said step of applying a second light beam comprises applying said second light beam (18) to said photosensitive high polymer film along the normal direction, said second light beam having a polarization direction in said photosensitive high polymer film.

6. A method according to claim 3, wherein each of said first and second light beams (19, 20) is a beam of natural light .

7. A method according to claim 1, wherein said steps of applying a first and second light beam (24, 25), respectively, are performed at the same time by using two types of light not interfering with each other.

## Patentansprüche

1. Ein Verfahren zum Herstellen einer Flüssigkristallorientierungsstruktur, welches folgende Schritte aufweist:
Vorbereiten eines Substrats (1a, 1b), welches einen lichtempfindlichen hochpolymeren Film (2, 12) auf einer Oberfläche des Substrats aufweist, wobei der lichtempfindliche hochpolymere Film zum Orientieren von Flüssigkristallmolekülen (7) in einer Richtung senkrecht zu einer Polarisationsrichtung von absorbiertem polarisiertem Licht in der Lage ist;
Anwenden eines ersten Lichtstrahls (3, 11, 13, 15, 17, 19) in einer ersten Richtung auf den lichtempfindlichen hochpolymeren Film, wobei der erste Lichtstrahl eine erste Polarisationsrichtung in dem lichtempfindlichen hochpolymeren Film hat; und
Anwenden eines zweiten Lichtstrahls (4, 12, 14, 16, 18, 20) in einer zweiten Richtung auf dem lichtempfindlichen hochpolymeren Film, wobei der zweite Lichtstrahl in dem lichtempfindlichen hochpolymeren Film Komponenten hat, welche in einer zweiten Polarisationsrichtung senkrecht auf der ersten Polarisationsrichtung polarisiert sind, **dadurch gekennzeichnet, dass** die optische Achse von mindestens einem der ersten und zweiten Lichtstrahlen schräg geneigt ist relativ zu der Oberfläche des lichtempfindlichen hochpolymeren Films, um Vorneigung zu erzeugen.

2. Ein Verfahren gemäß Anspruch 1, wobei der Schritt des Anwendens eines ersten Lichtstrahls das Anwenden des ersten Lichtstrahls (3, 11, 15) auf den lichtempfindlichen hochpolymeren Film entlang der Normalrichtung beinhaltet, und der Schritt des Anwendens eines zweiten Lichtstrahls das Anwenden des zweiten Lichtstrahls (4, 12, 16) auf den lichtempfindlichen hochpolymeren Film entlang der schrägen Richtung beinhaltet.

3. Ein Verfahren gemäß Anspruch 1, wobei jeder der Schritte des Anwendens eines ersten und zweiten Lichtstrahls (13, 14; 19, 20) jeweils das Anwenden des Lichtstrahls auf den lichtempfindlichen hochpolymeren Film entlang einer schrägen Richtung beinhaltet.

4. Ein Verfahren gemäß Anspruch 2, wobei der Schritt des Anwendens eines zweiten Lichtstrahls (16) einen Schritt des Anwendens von natürlichem Licht auf den lichtempfindlichen hochpolymeren Film entlang einer schrägen Richtung ist.

5. Ein Verfahren gemäß Anspruch 1, wobei der Schritt des Anwendens eines ersten Lichtstrahls das Anwenden des ersten Lichtstrahls (17) auf den lichtempfindlichen hochpolymeren Film entlang einer schrägen Richtung aufweist, wobei der erste Lichtstrahl ein Strahl von natürlichem Licht ist, und wobei der Schritt des Anwendens eines zweiten Lichtstrahls das Anwenden des zweiten Lichtstrahls (18) auf den lichtempfindlichen hochpolymeren Film entlang der Normalrichtung beinhaltet, wobei der zweite Lichtstrahl eine Polarisationsrichtung in dem lichtempfindlichen hochpolymeren Film hat.

6. Ein Verfahren gemäß Anspruch 3, wobei jeder der ersten und zweiten Lichtstrahlen (19, 20) ein Strahl von natürlichem Licht ist.

7. Ein Verfahren gemäß Anspruch 1, wobei die Schritte des Anwendens eines ersten und zweiten Lichtstrahls (24, 25) jeweils zu der gleichen Zeit durch Verwendung von zwei Typen von Licht durchgeführt werden, welche nicht miteinander interferieren.

## Revendications

1. Procédé de fabrication d'une structure d'orientation de cristaux liquides comprenant les étapes suivantes :
préparer un substrat (1a, 1b) comportant un film de haut polymère photosensible (2, 12) sur une surface du substrat, le film de haut polymère photosensible étant capable d'orienter des molécules de cristaux liquides (7) dans une direction perpendiculaire à une direction de polarisation de lumière polarisée absorbée ;
appliquer un premier faisceau lumineux (3, 11, 13, 15, 17, 19) dans une première direction par rapport au film de haut polymère photosensible, le premier faisceau lumineux ayant une première direction de polarisation dans le film de haut polymère photosensible ; et
appliquer un deuxième faisceau lumineux (4, 12, 14, 16, 18, 20) dans une deuxième direction par rapport au film de haut polymère photosensible, le deuxième faisceau lumineux ayant, dans le film de haut polymère photosensible, des composantes polarisées dans une deuxième direction de polarisation perpendiculaire à la première direction de polarisation ;
**caractérisé en ce que** l'axe optique d'au moins un des premier et deuxième faisceaux lumineux est incliné de façon oblique par rapport à la surface du film de haut polymère photosensible pour produire une préinclinaison.

2. Procédé selon la revendication 1, dans lequel l'étape d'application d'un premier faisceau lumineux comprend l'application du premier faisceau lumineux (3, 11, 15) au film de haut polymère photosensible suivant la direction normale, et l'étape d'application d'un deuxième faisceau lumineux comprend l'application du deuxième faisceau lumineux (4, 12, 16) au film de haut polymère photosensible suivant une direction oblique.

3. Procédé selon la revendication 1, dans lequel chacune des étapes d'application d'un premier et d'un deuxième faisceaux lumineux (13, 14 ; 19, 20), respectivement, comprend l'application du faisceau lumineux au film de haut polymère photosensible suivant une direction oblique.

4. Procédé selon la revendication 2, dans lequel l'étape d'application d'un deuxième faisceau lumineux (16) est une étape consistant à appliquer de la lumière naturelle au film de haut polymère photosensible suivant une direction oblique.

5. Procédé selon la revendication 1, dans lequel l'étape consistant à appliquer un premier faisceau lumineux comprend l'application du premier faisceau lumineux (17) au film de haut polymère photosensible suivant une direction oblique, le premier faisceau lumineux étant un faisceau de lumière naturelle, et l'étape d'application d'un deuxième faisceau lumineux comprend l'application du deuxième faisceau lumineux (18) au film de haut polymère photosensible suivant la direction normale, le deuxième faisceau lumineux ayant une direction de polarisation dans le film de haut polymère photosensible.

6. Procédé selon la revendication 3, dans lequel chacun des premier et deuxième faisceaux lumineux (19, 20) est un faisceau de lumière naturelle.

7. Procédé selon la revendication 1, dans lequel les étapes d'application d'un premier et d'un deuxième faisceaux lumineux (24, 25), respectivement, sont effectuées en même temps en utilisant deux types de lumière n'interférant pas entre eux.
